## Europäisches Patentamt
## European Patent Office
## Office européen des brevets

(19)

(11) Veröffentlichungsnummer : **0 116 379**
**B1**

(12) # EUROPÄISCHE PATENTSCHRIFT

(45) Veröffentlichungstag der Patentschrift : 30.12.86

(21) Anmeldenummer : 84200034.1

(22) Anmeldetag : 11.01.84

(51) Int. Cl.⁴ : **H 02 K 21/18, H 02 K 1/14**

(54) **Elektromotor mit einem U-förmig geformten Statoreisen.**

(30) Priorität : **17.01.83 DE 3301263**

(43) Veröffentlichungstag der Anmeldung : **22.08.84 Patentblatt 84/34**

(45) Bekanntmachung des Hinweises auf die Patenterteilung : **30.12.86 Patentblatt 86/52**

(84) Benannte Vertragsstaaten : **AT CH DE FR GB IT LI**

(56) Entgegenhaltungen :
EP-A- 0 084 198
CH-A- 629 069
DE-C- 534 319
Patent Abstracts of Japan vol. 3, no. 121, 11. Oktober 1979 Seite 101E143
FEINWERKTECHNIK & MESSTECHNIK, Band 87, Nr. 4, Mai/Juni 1979 H. SCHEMMANN "Zweipolige Einphasen-Synchronmotoren mit dauermagnetischen Läufer", Seiten 163-169

(73) Patentinhaber : **Philips Patentverwaltung GmbH Billstrasse 80 D-2000 Hamburg 28 (DE) DE**
**N.V. Philips' Gloeilampenfabrieken Groenewoudseweg 1 NL-5621 BA Eindhoven (NL) CH FR GB IT LI AT**

(72) Erfinder : **Bertram, Leo Am Sender 10 D-5190 Stolberg (DE)**
Erfinder : **Schemmann, Hugo, Dr. Zwartebergweg 6 NL-6371 XD Schaesberg (NL)**
Erfinder : **de Boer, Jan Oliemolenstraat Drachten (NL)**

(74) Vertreter : **Kupfermann, Fritz-Joachim et al Philips Patentverwaltung GmbH Billstrasse 80 Postfach 10 51 49 D-2000 Hamburg 28 (DE)**

## Beschreibung

Die Erfindung bezieht sich auf einen Einphasensynchronmotor mit einem zweipoligen dauermagnetischen Läufer und mit einem Stator, der aus Blechen gleichen Profils aufgebaut ist, die eine beim Ausstanzen gebildete U-Form aufweisen mit Schenkeln, auf denen Induktionsspulen angeordnet und deren freie Schenkelenden polschuhförmig ausgebildet sind, wobei sich zwischen den Polschuhen an den Schenkelenden ein Läufer befindet.

Einphasensynchronmotoren dieser Art sind allgemein bekannt. Sie setzen sich in der Praxis immer mehr durch, da sie außerordentlich klein sind im Verhältnis zu der abgegebenen Leistung. Formgestalter haben deshalb bei dem Entwurf von Geräten mehr Gestaltungsfreiheit.

Die bisher üblichen Einphasensynchronmotoren haben ein Statoreisen, das aus aufeinander geschichteten U-förmigen Flachblechen besteht. Form und Einsatz dieser Einphasensynchronmotoren sind bislang festgelegt durch das Statoreisen, das in Schichtungen parallel zu einer Mittelebene liegt und aus dem senkrecht die Läuferwelle hervorgeht.

Die US-PS-24 84 001 beschreibt das Statoreisen eines Gleichstrommotors, welches vierfach gebogen ist, um aufeinander zuweisende Polschuhe zu erhalten. Dabei ergibt sich nicht die Möglichkeit, die Achslage der Läuferachse gegenüber der Mittelebene der Schenkel des Statoreisens beliebige Winkel einschließen zu lassen. Man ist bei dieser Konstruktion absolut festgelegt.

Die DE-AS-15 38 715 beschreibt in Fig. 4 eine Elektromaschine mit einem kugelförmigen Luftspalt. Eine solche Maschine ist elektrisch und magnetisch sehr schwierig in den Griff zu bekommen und nicht einfach herstellbar, da die kugelschalenförmigen Polschuhe gefräst werden müssen.

Es ist Aufgabe der Erfindung, Wege zu finden, auf denen man sich von der bisherigen Gestalt dieser Einphasensynchronmotoren lösen kann und die einem Formgestalter weitere Gestaltungsfreiheit bieten, indem die Läuferwelle nicht mehr, wie bisher, senkrecht zur Mittelebene des Statoreisens verlaufen muß.

Die gestellte Aufgabe ist erfindungsgemäß dadurch gelöst, daß die Blechebene der Schenkelbleche des Statoreisens im Bereich zwischen den Polschuhen gegenüber einer Blechebene der Schenkel des Statoreisens im Spulenbereich derart abgewinkelt ist, daß die Achse des Läufers mit der Blechebene der Schenkel des Statoreisens im Spulenbereich einen von der Senkrechten auf dieser Blechebene abweichenden Winkel einschließt.

Durch Abbiegen der Schenkel des Statoreisens kann die Läuferachse praktisch unter jedem beliebigen Winkel zur Blechebene des Stators im Spulenbereich verlaufen. Der Motor ist damit den gewünschten Antriebsproblemen bzw. Antriebsanforderungen besser angepaßt. Es lassen sich beispielsweise zusätzliche Getriebe einsparen, die einerseits aufwendig und andererseits auch raumbeanspruchend sind.

Eine besondere Beweglichkeit ist gegeben, wenn nach einer weiteren Ausgestaltung der Erfindung in der Blechebene des Statoreisens ein Scharnier angeordnet ist. In diesem Fall wäre auch ein Verschwenken der Läuferachse gegenüber dem Statoreisen im Spulenbereich während des Betriebes denkbar. An sich ist es aus der CH-PS-629 069 bekannt, einen Stator eines Elektromotors mit einem Scharnier zu versehen. Diese Maßnahme gilt aber dem erleichterten Wickeln der Spulen.

Nach einer weiteren Ausgestaltung der Erfindung ist vorgesehen, daß die abgebogenen Schenkelblechteile an aus den Spulen hervorstehenden Schenkelstummeln angesetzt sind. Auf diese Weise wird ein nachträgliches Biegen der Eisenschenkel überflüssig.

Nach einer weiteren Ausgestaltung der Erfindung ist vorgesehen, daß das Statoreisen mit Schenkeln und Joch in seiner Mittelebene eine beachtlich größere Ausdehnung als senkrecht dazu aufweist. Mit dieser Ausgestaltungsweise eröffnen sich weitere Gestaltungsmöglichkeiten. Wenn auch eine Verbreiterung der Schenkel in der Blechebene nicht unendlich weit gehen kann, so ist es aber doch durch eine Verbreiterung der Schenkel in der Blechebene möglich, senkrecht zu dieser Ebene flacher zu werden. So kann beispielsweise bei einer Ausdehnung der Schenkel in der Blechebene in der Größenordnung zwischen 7 und 15 Einheiten eine Ausdehnung senkrecht dazu in der Größenordnung von 1 bis 7 Einheiten gegenüberstehen.

Wenn man dieses Aufbauprinzip nun weiterführt, dann kann man die Dicke der Bleche des Statoreisens gegenüber herkömmlichen Bauweisen verstärken auf Werte zwischen 0,5 und 5, vorzugsweise 1 mm. Verstärkt man die Bleche, dann braucht man nur noch weniger Bleche. Nach einer weiteren Ausgestaltung der Erfindung besteht das Statoreisen deshalb dann nur noch aus 1 bis 7, vorzugsweise 5, aufeinander geschichteten Blechen.

Je geringer die Zahl der Bleche ist, desto leichter ist es, das Statoreisen im gewünschten Bereich zu biegen, und desto weniger werden sich die abgebogenen Schenkel gegeneinander verschieben.

In letzter Konsequenz ergibt sich damit dann ein Einphasensynchronmotor, der von herkömmlichen Bauweisen stark abweicht, einfach herzustellen ist und dem Formgestalter einen großen Freiraum bietet.

Die Erfindung wird anhand der in den Zeichnungen dargestellten Ausführungsbeispiele näher erläutert. Es zeigen:

Figur 1 einen Einphasensynchronmotor mit abgebogenen, die Polschuhe tragenden Statorschenkeln,

Figur 2 den Motor nach Fig. 1 mit einsteckbaren, die Polschuhe tragenden Schenkeln,

Figur 3 eine Ausführungsform mit einer Abflachung des Statoreisens entsprechend der nach den Fig. 1 und 2, wobei in den Abbiegeachsen der die Polschuhe tragenden Schenkel des Statoreisens Scharniere vorgesehen sind,

Figur 4 eine Verdoppelung des Motors nach Fig. 1.

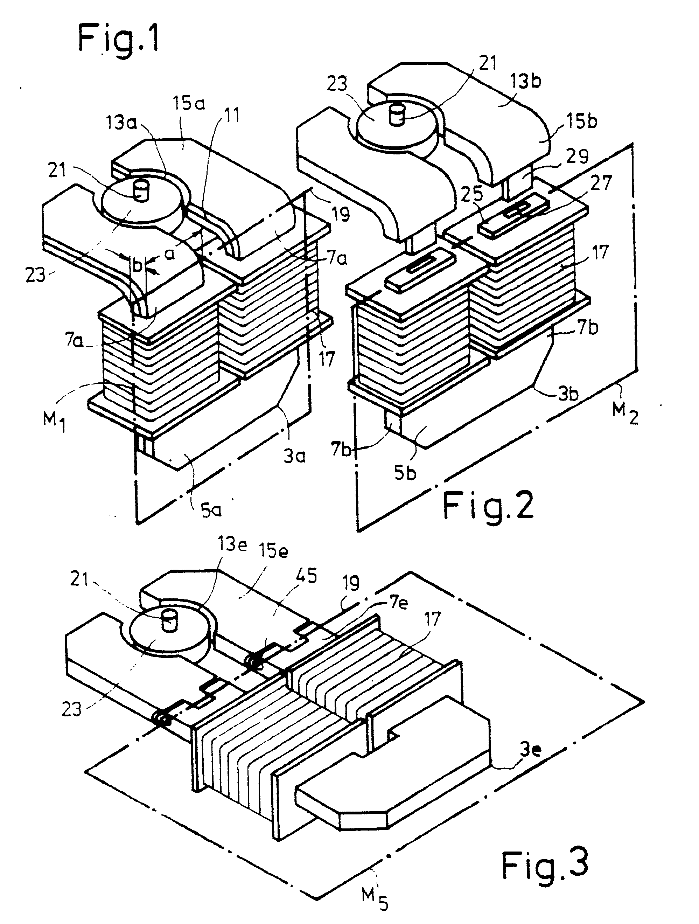

Fig. 1 zeigt die einfachste Ausführungsform des Synchronmotors mit abgewinkelten Schenkeln. Das Statoreisen 3a ist U-förmig geformt mit einem Joch 5a und Schenkeln 7a. In der Blechebene $M_1$ hat das Eisen dabei eine Ausdehnung a in der Größenordnung zwischen sieben und fünfzehn Einheiten, vorzugsweise zwölf, und senkrecht dazu eine Ausdehnung b in der Größenordnung von eins bis sieben Einheiten, vorzugsweise fünf. Das U-förmig geformte Statoreisen 3a besteht aus eins bis sieben, vorzugsweise fünf, aufeinander geschichteten Eisenblechen 11.

Bei der Herstellung des Motors werden zunächst die Bleche 11 aufeinander geschichtet. Die die Polschuhe 13a tragenden Teile 15a der Schenkel 7a verlaufen dabei in der Blechebene $M_1$. Es werden dann die Spulen 17 auf die Schenkel aufgeschoben ; daraufhin werden die Schenkel um eine Abbiegeachse 19 abgebogen. In der Darstellung beträgt die Abbiegung 90°. Es sind jedoch auch alle anderen Winkelstellungen möglich, die von 0° abweichen. Die Läuferachse 21 des dauermagnetischen Läufers 23 verläuft bei der Ausführungsform nach Fig. 1 parallel zur Blechebene $M_1$.

Die Anzahl der Eisenbleche 11 des Statoreisens hängt von den Flußverhältnissen im Stator ab. Es muß lediglich auf die Eisensättigung geachtet werden. Für das nachträgliche Abbiegen der Schenkelteile 15a ist es jedoch günstig, so wenig Bleche wie möglich einzusetzen. Darüber hinaus ist die Schichtung aus weniger Blechen kostengünstiger. Dicke Bleche sind jedoch schwieriger zu biegen als dünnere. Es gilt also, für eine wirtschaftliche Fertigung ein Optimum der Abmessung einzusetzen. Als zweckmäßig hat es sich erwiesen, wenn die Bleche zwischen 0,5 und 5 mm, vorzugsweise 1 mm, dick sind.

Bei der Ausführungsform nach Fig. 2 ist das Statoreisen 3b geteilt, und zwar in ein U-förmiges Basisteil mit Joch 5b und Schenkel 7b. Aus den Spulen 17 ragen Schenkelstummel 25 heraus, die mit Ausnehmungen 27 versehen sind, in die Zapfen 29 von Schenkelteilen 15b einsteckbar sind. Die mit den Polschuhen 13b versehenen Schenkelteile 15b werden nach dem Aufstecken der Spulen 17 auf die Schenkelstummel 25 aufgesetzt. Bei dieser Ausführungsform sind die Schenkelteile 15b vorzugsweise aus unlamelliertem Massiveisen gebildet. Für die Dimensionierung der Ausdehnungen in Richtung der Blechebene $M_2$ gelten die Regeln, die zu der Ausführungsform nach Fig. 1 angegeben sind.

Bei der Ausführungsform nach Fig. 3 ist ein Aufbau ähnlich dem nach Fig. 1 vorgesehen. Das U-förmig geformte, in der Ebene $M_5$ gelegene Statoreisen 3e ist mit Schenkeln 7e versehen, an die über Scharniere 45 die Polschuhe 13e tragende Schenkelteile 15e der Schenkel 7e angelenkt sind. Die Spulen 17 werden bei längsgerichteten Schenkelteilen 15e auf die Schenkel 7e aufgeschoben ; danach ist es möglich, die Teile 15e der Schenkel in einer gewünschten Richtung zu verschwenken. Die Dimensionierungen der Ausdehnungen entsprechen denen bei Fig. 1.

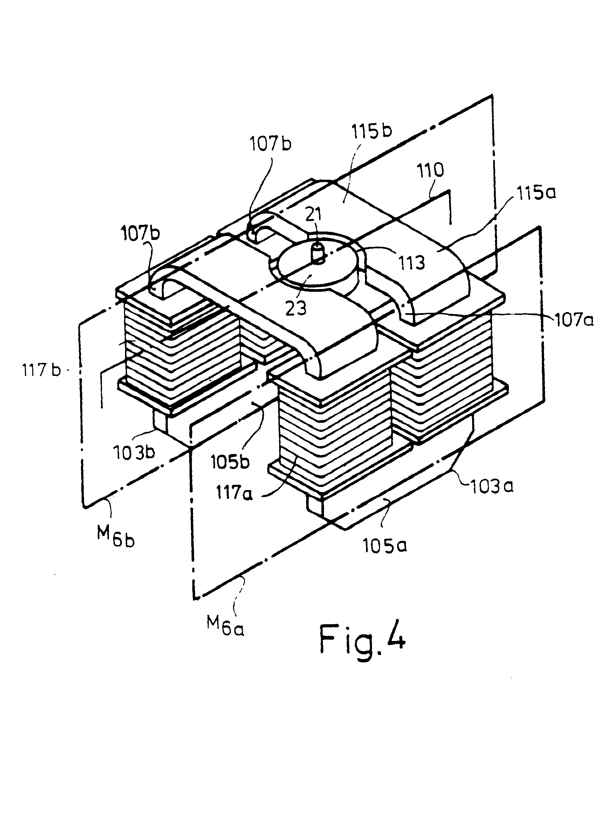

In der Ausführungsform nach Fig. 4 ist das Statoreisen 103a gegenüber dem Statoreisen nach Fig. 1 zu einer durch die Rotorachse 21 verlaufenden Ebene 110 verdoppelt, und zwar über die Polschuhe 113 hinaus. Bei einer Schenkelbiegung um 90° liegen dann in den parallelen Blechebenen $M_{6a}$ und $M_{6b}$ die Statoreisen 103a und 103b und die zugehörigen Joche 105a und 105b mit ihren Schenkeln 107a, 107b und ihren Erregerspulen 117a und 117b. In der Blechebene $M_{6a}$ ist das U-förmige Statoreisen mit 103 bezeichnet. Die Polschuhe 113 werden gemeinsam von den abgebogenen Schenkelteilen 115a und 115b getragen. Die weiteren Dimensionierungen entsprechen wieder denen nach Fig. 1.

In der Zeichnung verlaufen die Blechebenen $M_{6a}$ und $M_{6b}$ nach der Schenkelbiegung um 90° parallel zueinander. Die Winkellage der Blechebenen ist jedoch an die technischen Erfordernisse oder an formgestalterische Wünsche anpaßbar. Die Blechebenen $M_{6a}$ und $M_{6b}$ der Statoreisenteile 103a und 103b können deshalb je nach Wunsch mit der Senkrechten auf der Läuferachse unterschiedliche Winkel einschließen.

**Patentansprüche**

1. Einphasensynchronmotor mit einem zweipoligen dauermagnetischen Läufer (23) und mit einem Stator, der aus Blechen (11) gleichen Profils aufgebaut ist, die eine beim Ausstanzen gebildete U-Form aufweisen mit Schenkeln (z. B. 7a), auf denen Induktionsspulen (17) angeordnet und deren freie Schenkelenden (z. B. 15a) polschuhförmig ausgebildet sind, wobei sich zwischen den Polschuhen an den Schenkelenden ein Läufer (23) befindet, dadurch gekennzeichnet, daß die Blechebene der Schenkelbleche (7a, b, e ; 107a, b) des Statoreisens im Bereich zwischen den Polschuhen (13a-e ; 113) gegenüber einer Blechebene ($M_1$, $M_2$ ; $M_5$ ; $M_{6a}$, $M_{6b}$) der Schenkel des Statoreisens (3a, b, e, 10a, b) im Spulenbereich derart abgewinkelt ist, daß die Achse (21) des Läufers (23) mit der Blechebene ($M_1$, $M_2$, $M_5$, $M_{6a}$ und $M_{6b}$) der Schenkel des Statoreisens (3a, b, e, 103a, b) im Spulenbereich einen von der Senkrechten auf dieser Blechebene ($M_1$, $M_2$, $M_5$ ; $M_{6a}$ und $M_{6b}$) abweichenden Winkel einschließt.

2. Einphasensynchronmotor nach Anspruch 1, dadurch gekennzeichnet, daß in der Blechebene ($M_5$) des Statoreisens (3e) ein Scharnier (45) angeordnet ist (Fig. 5).

3. Einphasensynchronmotor nach Anspruch 1, dadurch gekennzeichnet, daß die abgebogenen Schenkelblechteile (15a, 15b) an aus den Spulen (17) hervorstehenden Schenkelstummeln (25) angesetzt sind (Fig. 2).

4. Einphasensynchronmotor nach einem der Ansprüche 1 bis 3, dadurch gekennzeichnet, daß das Statoreisen (3a, b, e, 103a, b) mit Schenkeln und Joch in seiner Blechebene ($M_1$, $M_2$ und $M_5$; $M_{6a}$ und $M_{6b}$) eine beachtlich größere Ausdehnung (a) als senkrecht dazu aufweist (Fig. 1, 2, 5 und 6).

5. Einphasensynchronmotor nach einem der Ansprüche 1 bis 4, dadurch gekennzeichnet, daß einer Ausdehnung (a) der Schenkel (7a, b, c, 107a, b) des Statoreisens (3a, b, e, 103a, 103b) in der Blechebene ($M_1$, $M_2$, $M_5$ und $M_{6a}$, $M_{6b}$) zwischen 7 und 15 Einheiten eine Ausdehnung (b) in der Größenordnung von 1 bis 7 Einheiten senkrecht dazu gegenübersteht (Fig. 1, 2, 5 und 6).

6. Einphasensynchronmotor nach Anspruch 5, dadurch gekennzeichnet, daß der größeren Ausdehnung der Schenkel (7a, b, e; 107a, 107b) des Statoreisens (3a, b, e, 103a, b) in der Größenordnung von 12 Einheiten eine kleinere Eisenausdehnung senkrecht dazu in der Größenordnung von 5 Einheiten gegenübersteht.

7. Einphasensynchronmotor nach einem der Ansprüche 1 bis 6, dadurch gekennzeichnet, daß die Dicke der Bleche (11) des Statoreisens (3a, 3b, 3e, 103a, b) zwischen 0,5 und 5, vorzugsweise 1 mm, beträgt.

8. Einphasensynchronmotor nach einem der Ansprüche 1 bis 7, dadurch gekennzeichnet, daß das Statoreisen aus 1 bis 7, vorzugsweise 5, aufeinander geschichteten Blechen besteht.

9. Einphasensynchronmotor nach einem der Ansprüche 1 bis 8, dadurch gekennzeichnet, daß das Statoreisen (103a, 103b) über den Läufer (23) hinaus verdoppelt ist (Fig. 6).

10. Einphasensynchronmotor nach Anspruch 9, dadurch gekennzeichnet, daß die Blechebenen ($M_{6a}$ und $M_{6b}$) der Statorteile (103a, b) mit der Senkrechten auf der Läuferachse unterschiedliche Winkel einschließen.

## Claims

1. A single phase synchronous motor comprising a two-pole permanent magnetic rotor (23) and a stator composed of sheets (11) having the same profile, which have a U-shaped form obtained during punching with limbs (for example 7a), on which induction coils (17) are arranged and whose free limb ends (for example 15a) are in the form of pole pieces, a rotor (23) being situated between the pole pieces at the limb ends, characterized in that the sheet plane of the limb sheets (7a, b, e; 107a, b) of the stator iron is rectangulary bent at the area between the pole pieces (13a-e; 113) with respect to a sheet plane ($M_1$, $M_2$, $M_5$; $M_{6a}$, $M_{6b}$) of the limbs of the stator iron (3a, b, e, 10a, b) at the area of the coils in such a manner that the shaft (21) of the rotor (23) encloses with the sheet plane ($M_1$, $M_2$, $M_5$; $M_{6a}$ and $M_{6b}$) of the limbs of the stator iron (3a, b, e; 103a, b) at the area of the coils an angle deviating from the perpendicular to this sheet plane ($M_1$, $M_2$, $M_5$; $M_{6a}$ and $M_{6b}$).

2. A single phase synchronous motor as claimed in Claim 1, characterized in that a hinge (45) is arranged in the sheet plane ($M_5$) of the stator iron (3e) (Fig. 5).

3. A single phase synchronous motor as claimed in Claim 1, characterized in that the bent limb sheet parts (15a, 15b) are fixed to limb stubs (25) projecting from the coils (17) (Fig. 2).

4. A single phase synchronous motor as claimed in any of the Claims 1 to 3, characterized in that the stator iron (3a, b, e; 103a, b) with limbs and yoke has in its sheet plane ($M_1$, $M_2$ and $M_5$; $M_{6a}$ and $M_{6b}$) a considerably larger expansion (a) than at light angles thereto (Figures 1, 2, 5 and 6).

5. A single phase synchronous motor as claimed in any one of Claims 1 to 4, characterized in that an expansion (a) of the limbs (7a, b, c; 107a, b) of the stator iron (3a, b, e; 103a, 103b) in the sheet plane ($M_1$, $M_2$, $M_5$ and $M_{6a}$, $M_{6b}$) between 7 and 15 units is set off by an expansion (b) of the order of magnitude of 1 to 7 units at right angles thereto (Figures 1, 2, 5 and 6).

6. A single phase synchronous motor as claimed in Claim 5, characterized in that the larger expansion of the limbs (7a, b, e; 107a, 107b) of the stator iron (3a, b, e; 103a, b) of the order of magnitude of 12 units is set off by a smaller iron expansion at right angles thereto of the order of magnitude of 5 units.

7. A single phase synchronous motor as claimed in any one of Claims 1 to 6, characterized in that the thickness of the sheets (11) of the stator iron (3a, 3b, 3e; 103a, b) lies between 0.5 and 5 mm and is preferably 1 mm.

8. A single phase synchronous motor as claimed in any one of Claims 1 to 7, characterized in that the stator iron comprises 1 to 7 and preferably 5 sheets stacked layerwise.

9. A single phase synchronous motor as claimed in Claims 1 to 8, characterized in that the stator iron (103a, 103b) is doubled across the rotor (23) (Fig. 6).

10. A single phase synchronous motor as claimed in Claim 9, characterized in that the sheet planes ($M_{6a}$ and $M_{6b}$) of the stator parts (103a, b) enclose different angles with the perpendicular to the rotor shaft.

## Revendications

1. Moteur synchrone monophasé muni d'un rotor à aimantation permanente bipolaire (23) et d'un stator, qui est constitué par un empilage de tôles magnétiques de même profil (M), présentant une forme en U formée pendant le découpage et munies de branches (par exemple 7a) sur lesquelles sont disposées des bobines d'induction (17) et dont l'extrémité libre (par exemple 15a) est en forme de pièce polaire, alors qu'un rotor (23) est prévu entre les pièces polaires aux extrémités des branches, caractérisé en ce que le plan de tôle des branches (7a, b, c ; 107a, b) du fer statorique est plié dans la portée entre les pièces polaires (13a-e, 113) par rapport au plan de tôle ($M_1$, $M_2$, $M_5$ ; $M_6$, $M_{6b}$) des branches du fer statorique (3a, b, e, 10a, b) dans la zone des bobines de façon que l'axe (21) du rotor (23) et le plan de tôle ($M_1$, $M_2$, $M_5$, $M_{6a}$ et $M_{6b}$) des branches du fer statorique (3a, b, e, 103a, b) dans la zone des bobines forment un angle qui s'écarte de la normale au plan de tôle ($M_1$, $M_2$, $M_5$ ; $M_{6a}$ et $M_{6b}$).

2. Moteur synchrone monophasé selon la revendication 1, caractérisé en ce que dans le plan de tôle ($M_5$) du fer statorique (3e) est disposée une charnière (figure 5).

3. Moteur synchrone monophasé selon la revendication 1, caractérisé en ce que les parties de tôle des branches courbées (15a, 15b) sont fixées à des parties de branche (25) (figure 2) saillant des bobines (17).

4. Moteur synchrone monophasé selon l'une des revendications 1 à 3, caractérisé en ce que, dans son plan médiane ($M_1$, $M_2$ et $M_5$), le fer statorique (3a, b, e, 103a, b) muni de branches et d'une culasse se dilate notablement plus que dans une direction perpendiculaire à ce plan (Fig. 1, 2, 5 et 6).

5. Moteur synchrone monophasé selon l'une des revendications 1 à 4, caractérisé en ce qu'une dilatation (a) des branches (7a, b, c, 107a, b) du fer statorique (3a, b, e, 103a, 103b) dans le plan de tôle ($M_1$, $M_2$, $M_5$ et $M_{6a}$, $M_{6b}$) comprise entre 7 et 15 unités s'oppose à une dilatation (b) de l'ordre de grandeur de 1 à 7 unités perpendiculaire audit plan (figures 1, 2, 5 et 6).

6. Moteur synchrone monophasé selon la revendication 5, caractérisé en ce que la plus grande dilatation des branches (7a, b, e ; 107a, 107b) du fer statorique (3a, b, e, 103a, b) de l'ordre de grandeur de 12 unités s'oppose à une plus petite dilatation du fer y perpendiculaire de l'ordre de grandeur de 5 unités.

7. Moteur synchrone monophasé selon l'une des revendications 1 à 6, caractérisé en ce que l'épaisseur des tôles (11) du fer statorique (3a, 3b, 3e, 103a, b) est comprise entre 0,5 et 5, de préférence 1 mm.

8. Moteur synchrone monophasé selon l'une des revendications 1 à 7, caractérisé en ce que le fer statorique est constitué par 1 à 7, de préférence 5 tôles superposées.

9. Moteur synchrone monophasé selon l'une des revendications 1 à 8, caractérisé en ce que le fer statorique (103a, 103b) est doublé au-delà du rotor (23) (figure 6).

10. Moteur synchrone monophasé selon la revendication 9, caractérisé en ce que le plan de tôle ($M_{6a}$ et $M_{6b}$) des parties de stator (103a, b) enferment de divers angles avec la normale à l'arbre de rotor.

Fig.1

Fig.2

Fig.3

Fig.4